# FASCICULE DE BREVET EUROPEEN

(11) **EP 0 993 381 B1**
(45) Date de publication et mention de la délivrance du brevet: **10.10.2001**
(21) Numéro de dépôt: 98938658.6
(22) Date de dépôt: 26.06.1998
(51) Int. Cl.: B60C 1/00

(54) **PNEUMATIQUE AVEC MELANGES DE COULEUR**
REIFEN MIT EINER MERHRZAHL VON FARBEN
TYRE WITH MIXED COLOURS

(30) Priorité: 02.07.1997 FR 9708562; 23.09.1997 FR 9711919
(43) Date de publication de la demande: 19.04.2000
(73) Titulaire: Compagnie Générale des Etablissements MICHELIN-MICHELIN & CIE, 63040 Clermont-Ferrand Cedex 09 (FR)
(72) Inventeur: FINCK, François, F-63100 Clermont-Ferrand (FR)
(74) Mandataire: Devaux, Edmond-Yves
(86) Numéro de dépôt international: EP9803918
(87) Numéro de publication internationale: WO9901299

(56) Documents cités:
- EP-A- 0 557 091
- EP-A- 0 576 130
- EP-A- 0 864 446
- DE-A- 3 048 489
- FR-A- 2 611 600
- US-A- 4 003 420
- US-A- 4 319 620
- DATABASE WPI Week 8710 Derwent Publications Ltd., London, GB; AN 87-071155 XP002086673 & SU 1 243 957 A (OBYDENNIKOV N S) , 15 juillet 1986

## Description

La présente invention concerne un pneumatique pour véhicule de Tourisme dont les surfaces extérieures sont de différentes couleurs, et en particulier de pneumatique présentant une couleur non noire sur les flancs et au moins une couleur non noire sur la bande de roulement.

Avec la venue des mélanges de caoutchouc comportant comme charge principale de la silice au lieu et place du noir de carbone, il est possible de réaliser des mélanges blancs et/ou de couleur, autre que noire ou blanche, par ajout de pigments de coloration. Un mélange de couleur non noire peut être employé comme composant unique de la bande de roulement, ou en combinaison avec un mélange usuel de couleur noire et/ou un autre mélange de couleur. Dans le cas de l'association sur une bande de roulement de mélanges de couleurs différentes, et en vue d'uniformiser l'usure de ladite bande de roulement tout en conservant un niveau de potentiel d'usure élevé, la constitution chimique des différents mélanges de caoutchouc doit être étudiée en conséquence.

La combinaison de plusieurs mélanges de constitutions différentes sur une même bande de roulement est connue. La demande de brevet d'invention FR 2 611 600 (correspondent au préambule de la revendication 1), en vue de réduire l'usure irrégulière d'une bande de roulement de pneumatique pour avion sans nuire à la nécessité de renforcer l'armature de renforcement sous-jacente, propose de diviser axialement ladite bande de roulement en trois parties : deux parties latérales dont le mélange de caoutchouc les constituant à un module à 100° et à 100 % d'allongement plus faible de 30 à 80 % que le module mesuré dans les mêmes conditions du mélange de caoutchouc constituant la partie centrale.

Ladite combinaison peut entraîner dans le cas où lesdits mélanges sont de différentes couleurs et où lesdits mélanges sont agencés structurellement de manière quelconque, des inconvénients majeurs pour la durée de vie du. pneumatique radial, ce dernier comprenant une armature de sommet formée d'au moins deux nappes de sommet d'éléments de renforcement inextensibles et croisés surmontant radialement une armature de carcasse radiale. En particulier, des phénomènes complexes de migration entre mélanges de certains additifs de constitution peuvent influer de manière néfaste sur l'endurance au niveau des décollages et séparations entre extrémités desdites nappes de sommet "croisées" du pneumatique radial, et/ou décollages entre armature de sommet et armature de carcasse, lorsque la durée de vie du pneumatique devient trop longue.

Afin de remédier auxdits inconvénients, le pneumatique, conforme à l'invention, doté d'une armature de carcasse radiale, d'une armature de sommet composée d'au moins deux nappes de sommet d'éléments de renforcement inextensibles, de préférence métalliques, parallèles entre eux dans chaque nappe et croisés d'une nappe à la suivante, et radialement à l'extérieur d'une bande de roulement, composée de mélanges caoutchouteux différentes, et axialement formée d'au moins trois parties longitudinales, les deux parties latérales de la bande de roulement, recouvrant radialement les extrémités axiales des nappes de sommet, est caractérisé en ce que les éléments de renforcement font avec la direction circonférentielle un angle étant compris entre 5° et 45°, les deux parties latérales de la bande de roulement sont constituées d'un mélange caoutchouteux d'une première couleur, et axialement entre les deux dites parties latérales, au moins une partie centrale étant constituée de mélange caoutchouteux d'une deuxième couleur, différente de la première et non noire, chaque extrémité axiale A, visible de l'extérieur du pneumatique, de la partie centrale colorée avec la deuxième couleur étant distante de l'extrémité, située du même côté par rapport au plan équatorial du pneumatique, de la nappe de sommet la moins large axialement d'une quantité L₀ au moins égale à 30 mm.

Le meilleur compromis uniformité d'usure-endurance d'armature de sommet est obtenu lorsque les deux parties latérales de la bande de roulement sont de couleur noire.

Entre les deux parties latérales peuvent exister une seule partie centrale de mélange caoutchouteux de deuxième couleur, ou encore une partie centrale reliée axialement aux deux parties latérales de première couleur par le moyen de deux parties intermédiaires, la partie colorée de la bande de roulement avec une deuxième couleur pouvant alors être soit une partie intermédiaire, soit les deux parties intermédiaires, et la partie centrale pouvant être de première couleur, ou de couleur différente de la deuxième couleur des parties intermédiaires.

L'épaisseur radiale du mélange de couleur non noire peut avoir une valeur comprise entre l'épaisseur totale de la bande de roulement, mesurée dans le plan équatorial, et une valeur égale à la distance radiale séparant la surface de bande de roulement de la surface radialement extérieure des témoins d'usure, placés en fond de rainures. Ladite épaisseur, pour des raisons de facilité et de coût de fabrication, est avantageusement égale à l'épaisseur de la bande de roulement.

L'amélioration de l'endurance de l'armature de sommet d'un tel pneumatique peut être complétée par la présence radialement au-dessus des nappes de sommet d'éléments de renforcement croisés d'au moins une nappe additionnelle d'éléments de renforcement circonférentiels, nappe dont la largeur axiale est supérieure à la largeur de la nappe de sommet "croisée" la plus large et ladite nappe additionnelle remplissant deux fonctions : une fonction de frettage comme connu, mais aussi une fonction d'écran à la migration des additifs de mélangeage et en particulier des additifs d'anti-vieillissement, du fait de son épaisseur propre et de la composition de son calandrage.

Il est particulièrement avantageux d'utiliser aux fins ci-dessus deux nappes d'éléments de renforcement circonférentiels, de préférence en polyamide aliphatique, les deux nappes ayant des largeurs supérieures à la largeur de la nappe de sommet "croisée" la plus large. Pour une efficacité maximale, la nappe d'éléments circonférentiels la moins large axialement aura une largeur égale à au moins 105 % de la largeur de la nappe de sommet "croisée" la plus large, cette dernière étant supérieure à la largeur de la surface de contact entre le sol et la bande roulement du pneumatique, gonflé à sa pression de service et portant sa charge nominale.

Afin d'avoir, d'une part, une usure de bande de roulement la plus régulière possible transversalement malgré la présence d'au moins deux mélanges de composition et de couleur différentes, et de minimiser, d'autre part, les risques de décollage entre produits sur la surface de bande de roulement, les extrémités A, visibles de l'extérieur du pneumatique, des deux bords axiaux de chaque partie de deuxième couleur seront localisées dans les fonds de rainures circonférentielles, délimitant axialement ladite partie de deuxième couleur, lesdites rainures circonférentielles étant de préférence longitudinales.

Le pneumatique de couleur, conforme à l'invention, comporte au moins un des flancs, du moins partiellement, de couleur non noire, avec un arrangement des mélanges caoutchouteux connu en soi, le mélange de couleur axialement à l'extérieur étant délimité radialement par deux protubérances de flanc faisant saillie axialement à l'extérieur. La distance curviligne séparant l'extrémité radialement supérieure du mélange coloré de flanc de l'extrémité axialement extérieure de la nappe de sommet "croisée" la plus large est avantageusement au moins égale à 30 mm.

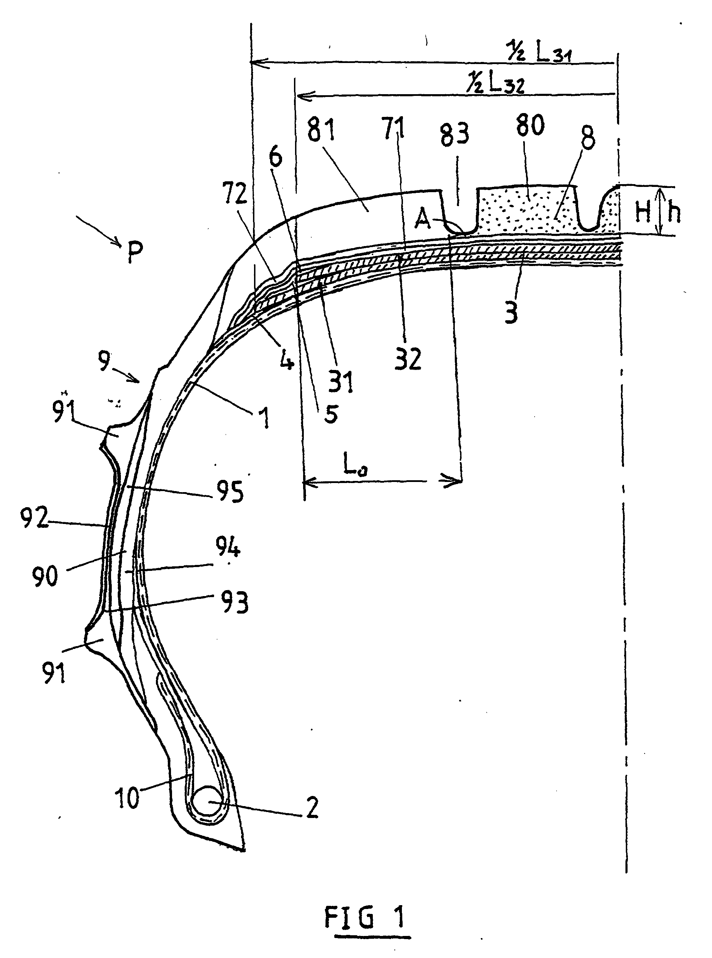

Les caractéristiques et avantages de la présente invention apparaîtront plus clairement à la lecture de la description qui suit et à laquelle est annexé le dessin sur lequel la figure unique représente, vu en section méridienne, un pneumatique conforme à l'invention.

Le pneumatique P comprend une armature de carcasse (1), composée de deux nappes de câbles radiaux en polyester, et ancrée par retournement (10) à au moins une tringle (2) dans chaque bourrelet. L'armature de carcasse (1) est surmontée radialement d'une armature de sommet (3) formée de deux nappes (31) et (32) du même nom, renforcées par des câbles métalliques inextensibles croisés d'une nappe à la suivante, la nappe (31) radialement intérieure ayant une largeur axiale L₃₁ supérieure à la largeur axiale L₃₂ de la nappe de sommet radialement la plus à l'extérieur. Dans l'exemple décrit d'un pneumatique de dimension 155/70.R.13, la largeur L₃₁ est égale à 123 mm. La largeur L₃₂ est plus faible que L₃₁ et égale à 110 mm, alors que la largeur axiale de la surface de contact entre le sol et le pneumatique, portant sa charge nominale de 380 kg et gonflé à sa pression de service de 2,5 bars, est de 109 mm. Comme connu en soi, chaque bord de la nappe (31) est séparée de la nappe de carcasse la plus à l'extérieur par un profilé de caoutchouc (4) de faible épaisseur, les bords respectivement des nappes (31) et (32) étant séparés entre eux par une couche caoutchouteuse de bordure (5) d'épaisseur égale à 0,5 mm, et les bords de la nappe la moins large (32) étant aussi recouverts radialement par une couche de bordure (6) d'épaisseur de 0,5 mm.

L'ensemble nappes "croisées" et gommes de bordure ci-dessus est recouvert radialement à l'extérieur de deux nappes (71) et (72) d'éléments de renforcement circonférentiels, lesdits éléments étant des câbles textiles de polyamide aliphatique enrobés dans un mélange de calandrage adapté à de tels câbles. Les largeurs des nappes (71) et (72), égales entre elles, sont supérieures à celles des nappes (31) et (32), de manière à recouvrir axialement les bords de la nappe "croisée" la plus large (31) de l'armature de sommet.

La bande roulement (8), recouvrant l'ensemble des nappes, comprend trois parties longitudinales : une partie centrale (80) et deux parties latérales (81). Lesdites parties (81) sont composées d'un mélange caoutchouteux de couleur noire et dont la constitution a été choisie pour posséder des propriétés d'usure sensiblement identiques aux propriétés du même nom du mélange de couleur non noire constituant la partie centrale (80). Les bords axiaux de ladite partie centrale (80) sont tels que les extrémités A de ces bords, visibles à l'extérieur, soient localisées dans les fonds de rainures longitudinales (83) délimitant axialement ladite partie centrale (80). Chaque extrémité axiale et visible de la partie centrale A est distante de l'extrémité de la nappe de sommet "croisée" la moins large (32), située du même côté par rapport au plan médian de l'anneau de caoutchouc de couleur non noire, d'une quantité L₀ égale à 35 mm, soit 32 % de la largeur axiale L₃₂ de ladite nappe (32).

Quant à l'épaisseur radiale h de la partie centrale (80) de couleur non noire, elle est, dans le cas décrit, égale à l'épaisseur H de la bande de roulement (8), ladite épaisseur étant, mesurée dans le plan équatorial, la distance radiale entre la surface de bande de roulement et la nappe de sommet radialement la plus à l'extérieur.

La bande de roulement (8) est reliée, de part et d'autre du plan équatorial, au bourrelet du pneumatique par un flanc (9) comprenant aussi une partie de couleur. Ladite partie (90), délimitée radialement par deux protubérances (91), est composée, en allant de l'extérieur à l'intérieur, d'une couche de mélange caoutchouteux (92) coloré (le noir étant exclus), axialement adjacent à une couche (93) de mélange caoutchouteux plus particulièrement résistant au phénomène d'initiation à la cassure, ladite couche (93) étant elle-même reliée à une couche (94) de flanc usuelle par une couche (95) de mélange caoutchouteux destiné à éviter au maximum la migration des produits en provenance de la couche (94).

## Revendications

1. Pneumatique P pour véhicule de Tourisme doté d'une armature de carcasse radiale (1) et d'une armature de sommet (3) composée d'au moins deux nappes de sommet (31, 32) d'éléments de renforcement inextensibles, de préférence métalliques, parallèles entre eux dans chaque nappe et croisés d'une nappe à la suivante, et radialement à l'extérieur d'une bande de roulement (8), composée de mélanges caoutchouteux différentes, et axialement formée d'au moins trois parties longitudinales (80, 81, 81), les deux parties latérales (81) de la bande de roulement (8) recouvrant radialement les extrémités axiales des nappes de sommet (31, 32), **caractérisé en ce que** les éléments de renforcement font avec la direction circonférentielle un angle étant compris entre 5° et 45°, les deux parties latérales de la bande de roulement (8) sont constituées d'un mélange caoutchouteux d'une première couleur, et axialement entre les deux dites parties latérales (81), au moins une partie centrale (80) étant constituée de mélange caoutchouteux d'une deuxième couleur, différente de la première et non noire, chaque extrémité axiale A, visible de l'extérieur du pneumatique, de la partie centrale (80) colorée avec la deuxième couleur étant distante de l'extrémité, située du même côté par rapport au plan équatorial du pneumatique, de la nappe de sommet (31, 32) la moins large axialement d'une quantité L₀ au moins égale à 30 mm.

2. Pneumatique P selon la revendication 1, **caractérisé en ce que** les deux parties latérales (81) de la bande de roulement (8) sont de couleur noire.

3. Pneumatique P selon l'une des revendications 1 ou 2, **caractérisé en ce que** la bande de roulement (8) est formée de trois parties, la partie centrale unique (80) étant constituée d'un mélange caoutchouteux d'une deuxième couleur.

4. Pneumatique P selon l'une des revendications 1 ou 2, **caractérisé en ce que** la partie (80) de mélange caoutchouteux de deuxième couleur, comprise entre les deux parties latérales (81) est subdivisée en deux bandes intermédiaires situées de part et d'autre du plan équatorial du pneumatique.

5. Pneumatique P selon la revendication 4, **caractérisé en ce que** les bandes intermédiaires sont réunies axialement par une bande centrale de mélange caoutchouteux de première couleur.

6. Pneumatique P selon l'une des revendications 1 à 5, **caractérisé en ce que**, radialement au dessus des nappes de sommet (31, 32), est disposée au moins une nappe additionnelle (71) d'éléments de renforcement circonférentiels, ladite nappe additionnelle (71) ayant une largeur axiale supérieure à la largeur de la nappe de sommet "croisée" la plus large.

7. Pneumatique P selon la revendication 6, **caractérisé en ce que**, radialement au dessus des nappes de sommet (31), (32), sont disposées deux nappes additionnelles (71, 72) d'éléments de renforcement circonférentiels, lesdites nappes additionnelles (71, 72) ayant des largeurs axiales, supérieures à la largeur de la nappe "croisée" la plus large.

8. Pneumatique P selon l'une des revendications 6 ou 7, **caractérisé en ce que** les éléments de renforcement circonférentiels sont en polyamide aliphatique.

9. Pneumatique P selon l'une des revendications 1 à 8, **caractérisé en ce que** l'épaisseur radiale h de la partie (80) de mélange caoutchouteux de deuxième couleur a une valeur au plus égale à l'épaisseur totale H de la bande de roulement (8), mesurée dans le plan équatorial, et une valeur au moins égale à la distance radiale séparant la surface de bande de roulement (8) de la surface radialement extérieure des témoins d'usure, placés en fond de rainures.

10. Pneumatique P selon la revendication 9, **caractérisé en ce que** l'épaisseur radiale h de la partie (80) de deuxième couleur est égale à l'épaisseur H de la bande de roulement (8), ladite épaisseur H étant, mesurée dans le plan équatorial, la distance radiale entre la surface de bande de roulement et la nappe additionnelle (72) radialement la plus à l'extérieur.

11. Pneumatique selon l'une des revendications 1 à 10, **caractérisé en ce que** les extrémités axiales A de la partie (80) de mélange caoutchouteux de deuxième couleur autre que noire, visibles de l'extérieur, sont localisées dans les fonds de rainures circonférentielles (83) délimitant axialement ladite partie (80).

12. Pneumatique P selon la revendication 11, **caractérisé en ce que** les rainures circonférentielles (83) sont longitudinales.

13. Pneumatique selon l'une des revendications 1 à 12,
**caractérisé en ce qu'**il comporte au moins un des flancs (9), du moins partiellement, de couleur non noire, le mélange de couleur (92) axialement à l'extérieur étant délimité radialement par deux protubérances (91) de flanc faisant saillie axialement à l'extérieur.

14. Pneumatique P selon la revendication 13, **caractérisé en ce que** la couche de mélange caoutchouteux (92) de couleur non noire est, axialement à l'intérieur, adjacente à une couche (93) de mélange caoutchouteux plus particulièrement résistant au phénomène d'initiation à la cassure, ladite couche (93) étant elle-même reliée axialement à l'intérieur à une couche (94) de flanc, de composition caoutchouteuse usuelle, au moyen d'une couche intermédiaire (95) de mélange caoutchouteux destiné à éviter au maximum la migration des produits de la couche (94).

## Patentansprüche

1. Reifen P für ein Tourenfahrzeug, der mit einer radialen Karkassenbewehrung (1) und einer Scheitelbewehrung (3), die aus mindestens zwei Scheitellagen (31, 32) aus undehnbaren Verstärkungselementen zusammengesetzt ist, die bevorzugt aus Metall bestehen, in jeder Lage zueinander parallel verlaufen und von einer Lage zur folgenden überkreuz laufen, sowie radial an der Außenseite mit einer Lauffläche (8) versehen ist, die aus gummihaltigen Mischungen zusammengesetzt ist und axial aus mindestens drei längsverlaufenden Teilen (80, 81, 81) gebildet ist, wobei die beiden seitlichen Teile (81) der Lauffläche (8) radial die axialen Enden der Scheitellagen (31, 32) abdecken, **dadurch gekennzeichnet, daß** die Verstärkungselemente zur Umfangsrichtung einen Winkel bilden, der zwischen 5° und 45° liegt, und daß die beiden seitlichen Teile der Lauffläche (8) aus einer gummihaltigen Mischung mit einer ersten Farbe gebildet sind, und axial zwischen den genannten beiden seitlichen Teilen (81) mindestens ein mittlerer Teil (80) aus einer gummihaltigen Mischung mit einer zweiten Farbe gebildet ist, die zur ersten unterschiedlich und nicht schwarz ist, wobei jedes axiale Ende A, das von der Außenseite des Reifens her zu sehen ist, des mittleren Teils (80), der mit der zweiten Farbe gefärbt ist, von dem Ende der am wenigsten breiten Scheitellage (30, 31), das bezüglich der Äquatorialebene des Reifens auf der selben Seite gelegen ist, axial einen Abstand um eine Größe L₀ hat, die mindestens 30 mm beträgt.

2. Reifen P nach Anspruch 1, **dadurch gekennzeichnet, daß** die beiden seitlichen Teile (81) der Lauffläche (8) schwarze Farbe aufweisen.

3. Reifen P nach einem der Ansprüche 1 oder 2, **dadurch gekennzeichnet, daß** die Lauffläche (8) aus drei Teilen gebildet ist, wobei das einzige mittlere Teil (80) aus einer gummihaltigen Mischung in einer zweiten Farbe gebildet ist.

4. Reifen P nach einem der Ansprüche 1 oder 2, **dadurch gekennzeichnet, daß** der Teil (80) aus gummihaltiger Mischung in zweiter Farbe, der zwischen den beiden seitlichen Teilen (81) angeordnet ist, in zwei Zwischenbänder unterteilt ist, die beiderseits der Äquatorialebene des Reifens gelegen sind.

5. Reifen P nach Anspruch 4, **dadurch gekennzeichnet, daß** die Zwischenbänder axial durch ein mittiges Band aus gummihaltiger Mischung in der ersten Farbe vereint sind.

6. Reifen P nach einem der Ansprüche 1 bis 5, **dadurch gekennzeichnet, daß** radial über den Scheitellagen (31, 32) mindestens eine zusätzliche Lage (71) aus Umfangs-Verstärkungselementen angeordnet ist, wobei die genannte zusätzliche Lage (71) eine axiale Breite aufweist, die größer ist als die Breite der breitesten "überkreuz liegenden" Scheitellage.

7. Reifen P nach Anspruch 6, **dadurch gekennzeichnet, daß** radial über den Scheitellagen (31), (32) zwei zusätzliche Lagen (71, 72) aus Umfangs-Verstärkungselementen angeordnet sind, wobei die genannten zusätzlichen Lagen (71, 72) axiale Breiten haben, die größer sind als die Breite der breitesten "überkreuz liegenden" Lage.

8. Reifen P nach einem der Ansprüche 6 oder 7, **dadurch gekennzeichnet, daß** die Umfangs-Verstärkungselemente aus aliphatischem Polyamid bestehen.

9. Reifen P nach einem der Ansprüche 1 bis 8, **dadurch gekennzeichnet, daß** die radiale Dicke h des Teils (80) aus gummihaltiger Mischung in zweiter Farbe einen Wert hat, der höchstens gleich ist der Gesamtdicke H der Lauffläche (8), gemessen in der Äquatorialebene, und einen Wert, der mindestens gleich ist dem radialen Abstand, der die Oberfläche der Lauffläche (8) von der radial äußeren Oberfläche der Abnutzungsanzeiger trennt, die am Boden von Rillen angeordnet sind.

10. Reifen P nach Anspruch 9, **dadurch gekennzeichnet, daß** die radiale Dicke h des Teils (80) in zweiter Farbe gleich ist der Dicke H der Lauffläche (8), wobei die Dikke H, in der Äquatorialebene gemessen, der radiale Abstand der Oberfläche der Lauffläche und der radial am weitesten außenliegenden, zusätzlichen Lage (72) ist.

11. Reifen nach einem der Ansprüche 1 bis 10, **dadurch gekennzeichnet, daß** die axialen Enden A des Teils (80) aus gummihaltiger Mischung in zweiter, nicht-schwarzer Farbe, die von außen sichtbar sind, in den Böden von Umfangsrillen (83) angeordnet sind, die axial den genannten Teil (80) begrenzen.

12. Reifen P nach Anspruch 11, **dadurch gekennzeichnet, daß** die Umfangsrillen (83) längsverlaufend sind.

13. Reifen nach einem der Ansprüche 1 bis 12, **dadurch gekennzeichnet, daß** er mindestens eine der Flanken (9) mindestens teilweise in nicht-schwarzer Farbe aufweist, wobei die farbige Mischung (92) axial auf der Außenseite radial durch zwei Flankenausstülpungen (91) begrenzt ist, die axial nach außen vorspringen.

14. Reifen P nach Anspruch 13, **dadurch gekennzeichnet, daß** die Schicht (92) aus gummihaltiger Mischung mit nicht-schwarzer Farbe axial auf der Innenseite eine benachbarte Schicht (93) aus gummihaltiger Mischung aufweist, die ganz besonders beständig gegenüber dem Phänomen des Bruchbeginns ist, wobei die genannte Schicht (93) ihrerseits axial auf der Innenseite mit einer Flankenschicht (94) aus einer üblichen, gummihaltigen Zusammensetzung verbunden ist, und zwar mittels einer Zwischenschicht (95) aus einer gummihaltigen Mischung, die dazu bestimmt ist, in maximaler Weise die Migration bzw. das Wandern der Produkte der Schicht (94) zu vermeiden.

## Claims

1. A passenger vehicle tyre P comprising a radial carcass reinforcement (1), a crown reinforcement (3) composed of at least two crown plies (31, 32) of inextensible reinforcing elements, preferably metal ones, parallel to each other in each ply and crossed from one ply to the next, and radially to the outside a tread (8), composed of different rubber mixes, and axially formed of at least three longitudinal parts (80, 81, 81), the two lateral parts (81) of the tread (8), radially covering the axial ends of the crown plies (31, 32), **characterised in that** the reinforcing elements form with the circumferential direction an angle of between 5° and 45°, the two lateral parts of the tread (8) are formed of a rubber mix of a first colour, and axially between said two lateral parts (81), at least one central part (80) consisting of a rubber mix of a second colour, different from the first and other than black, each axial end A, which is visible from the outside of the tyre, of the central coloured part (80) with the second colour being distant from the end, situated on the same side relative to the equatorial plane of the tyre, of the axially least wide crown ply (31, 32) by a distance L₀ at least equal to 30 mm.

2. A tyre P according to Claim 1, **characterised in that** the two lateral parts (81) of the tread (8) are black.

3. A tyre P according to one of Claims 1 or 2, **characterised in that** the tread (8) is formed of three parts, the single central part (80) being formed of a rubber mix of a second colour.

4. A tyre P according to one of Claims 1 or 2, **characterised in that** the part (80) of rubber mix of second colour, lying between the two lateral parts (81), is subdivided into two intermediate bands situated on either side of the equatorial plane of the tyre.

5. A tyre P according to Claim 4, **characterised in that** the intermediate bands are joined axially by a central band of rubber mix of first colour.

6. A tyre P according to one of Claims 1 to 5, **characterised in that**, radially above the crown plies (31, 32), there is arranged at least one additional ply (71) of circumferential reinforcing elements, said additional ply (71) having an axial width greater than the width of the widest "crossed" crown ply.

7. A tyre P according to Claim 6, **characterised in that**, radially above the crown plies (31, 32), there are arranged two additional plies (71, 72) of circumferential reinforcing elements, said additional plies (71, 72) having axial widths greater than the width of the widest "crossed" ply.

8. A tyre P according to one of Claims 6 or 7, **characterised in that** the circumferential reinforcing elements are made of aliphatic polyamide.

9. A tyre P according to one of Claims 1 to 8, **characterised in that** the radial thickness h of the part (80) of rubber mix of second colour has a value equal at most to the total thickness H of the tread (8), measured in the equatorial plane, and a value at least equal to the radial distance between the surface of the tread (8) and the radially outer surface of the wear indicators placed at the bottom of the grooves.

10. A tyre P according to Claim 9, **characterised in that** the radial thickness h of the part (80) of second colour is equal to the thickness H of the tread (8), said thickness H, measured in the equatorial plane, being the radial distance between the tread surface and the radially outermost additional ply (72).

11. A tyre according to one of Claims 1 to 10, **characterised in that** the axial ends A of the part (80) of rubber mix of second colour other than black, which are visible to the outside, are located at the bottoms of circumferential grooves (83) axially delimiting said part (80).

12. A tyre P according to Claim 11, **characterised in that** the circumferential grooves (83) are longitudinal.

13. A tyre according to one of Claims 1 to 12, **characterised in that** it comprises at least one of the sidewalls (9), at least partially, of a colour other than black, the coloured mix (92) axially to the outside being radially delimited by two sidewall protuberances (91) projecting axially to the outside.

14. A tyre P according to Claim 13, **characterised in that** the layer of rubber mix (92) of colour other than black is, axially to the inside, adjacent to a layer (93) of rubber mix more particularly resistant to the phenomenon of fracture initiation, said layer (93) being in turn axially connected to the inside to a sidewall layer (94) of standard rubber composition by means of an intermediate layer (95) of rubber mix intended to avoid to the maximum the migration of products from the layer (94).
